# EUROPÄISCHE PATENTANMELDUNG

(11) **EP 4 723 313 A1**
(43) Veröffentlichungstag der Anmeldung: **08.04.2026**
(21) Anmeldenummer: 24203777.8
(22) Anmeldetag: 01.10.2024
(51) Int. Cl.: H01M 50/105, H01M 50/211, H01M 6/40, H01M 6/46, H01M 50/238

(54) **DÜNNSCHICHTBATTERIE MIT MEHREREN ELEKTROCHEMISCHEN EINZELZELLEN**

(71) Anmelder: VARTA Microbattery GmbH, 73479 Ellwangen Jagst (DE)
(72) Erfinder: Ates-Krumm, Tugce, 89584 Volkersheim (DE); Kohls, Ulrich, 73460 Hüttlingen (DE); Turyk, Zoryana, 73479 Ellwangen (DE)
(74) Vertreter: Ostertag & Partner Patentanwälte mbB

(57) **Zusammenfassung**

Es wird eine Dünnschichtbatterie (100) mit mehreren elektrochemischen Einzelzellen (10) bereitgestellt. Die elektrochemischen Einzelzellen (10) sind auf einer Trägerfolie (50) als gemeinsamem Träger aufgebracht. Die elektrochemischen Einzelzellen (10) liegen gestapelt übereinander. Die elektrochemischen Einzelzellen (10) sind jeweils durch eine Faltkante (11) in der Trägerfolie von einer benachbarten elektrochemischen Einzelzelle getrennt. Die elektrochemischen Einzelzellen (10) sind durch mindestens eine Stromleiterschicht (12; 51) der Trägerfolie elektrisch miteinander verbunden. Die Dünnschichtbatterie zeichnet sich weiterhin dadurch aus, dass die Trägerfolie im Bereich der Faltkanten (11) Schwächungslinien (510) aufweist.

## Beschreibung

Die vorliegende Erfindung betrifft eine Dünnschichtbatterie mit mehreren elektrochemischen Einzelzellen sowie ein Verfahren zu deren Herstellung.

### ANWENDUNGSGEBIET UND STAND DER TECHNIK

Elektrochemische Energiespeicherzellen sind dazu in der Lage, gespeicherte chemische Energie durch eine Redoxreaktion in elektrische Energie umzuwandeln. Sie umfassen in der Regel eine positive und eine negative Elektrode, die gegebenenfalls von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den gegebenenfalls vorhandenen Separator und wird durch einen ionenleitenden Elektrolyten ermöglicht.

Mehrere elektrochemische Einzelzellen können zu einer Batterie zusammengefasst werden, wobei die Einzelzellen seriell und/oder parallel miteinander verschaltet werden. Elektrochemische Einzelzellen und Batterien werden im Folgenden allgemein als Energiespeicherelemente bezeichnet.

Neben Energiespeicherelementen mit zylindrischer oder prismatischer Form sind auch flache (planare), unter Umständen sehr dünne und gegebenenfalls flexible Energiespeicherelemente bekannt. Bei derartigen Energiespeicherelementen sind einzelne, mehrere oder prinzipiell alle Komponenten der Energiespeicherelemente, also insbesondere die Elektroden und der Elektrolyt und gegebenenfalls die Separatoren, in flacher Form auf einen Träger aufgebracht. Hierfür können Druckverfahren eingesetzt werden, wobei druckbare Pasten oder Tinten mit den entsprechenden Bestandteilen auf den Träger aufgebracht werden. Andere Möglichkeiten zum Aufbringen der Komponenten als dünne Schichten liegen in der chemischen Gasphasenabscheidung (CVD) oder in der physikalischen Gasphasenabscheidung (PVD). Solche Energiespeicherelemente, bei denen einige oder alle Komponenten als dünne Schichten auf einem Träger aufgebracht sind, werden auch als Dünnschichtzellen oder Dünnschichtbatterien bezeichnet werden.

Derart hergestellte Energiespeicherelemente sind beispielsweise aus der WO 2006/105966 A1 bekannt. Hier wird ein galvanisches Element mit mindestens einer positiven und mindestens einer negativen Elektrode beschrieben, wobei die Elektroden nebeneinander auf einem flächigen, elektrisch nichtleitenden Substrat, insbesondere einer Kunststofffolie, aufgebracht sind (koplanare Anordnung). Die Elektroden sind über einen ionenleitfähigen Elektrolyten (beispielsweise eine gelartige Zinkchloridpaste) miteinander verbunden. Zwischen dem Substrat und den Elektroden sind Leiterbahnen angeordnet, die als Ableiter dienen.

Weiterhin sind gedruckte elektrochemische Zellen mit einem mehrschichtigen Aufbau bekannt. Dabei kann die elektrochemische Zelle beispielsweise zwei Stromkollektorebenen, zwei Elektrodenebenen und eine Elektrolytebene in stapelartiger Anordnung aufweisen. Die Elektrolytebene ist zwischen den beiden Elektrodenebenen angeordnet. Die Stromkollektoren bilden die Ober- bzw. die Unterseite der elektrochemischen Zelle. Eine elektrochemische Zelle mit einem solchen Aufbau geht beispielsweise aus der US 4,119,770 A hervor.

Die EP 4 047 695 A1 offenbart ein Verfahren zur Herstellung von Dünnschichtzellen bzw. von Dünnschichtbatterien, wobei auf eine Trägerfolie Leiterschichten (Stromkollektoren), Elektrodenschichten, Separatorschichten und Elektrolytschichten derart aufgebracht werden, dass durch Zusammenfalten bzw. Umschlagen der beschichteten Trägerfolie eine stapelartige Anordnung der Elektroden zur Ausbildung von nebeneinander liegenden Einzelzellen ausgebildet wird. Die Einzelzellen sind durch gemeinsame Leiterschichten elektrisch miteinander verschaltet.

Weiterhin sind Dünnschichtbatterien bekannt, bei denen mehrere einzelne Dünnschichtzellen miteinander verschaltet sind und in gestapelter Form vorliegen. Beispielsweise beschreibt die

US 2019/0237717 A1 eine Anordnung von Dünnschichtzellen, wobei die einzelnen Zellen zwischen einem oberen und einem unteren Trägersubstrat bzw. zwischen einem ersten und einem zweiten flexiblen Einkapselungsfilm liegen. Das Trägersubstrat kann derart hin und her gefaltet sein, dass die einzelnen Dünnschichtzellen übereinander liegen und einen Stapel bilden.

Die WO 2019/086935 A1 zeigt eine gefaltete, gedruckte Lithium-Ionen-Batterie mit einer ackordeonartigen Faltung eines gemeinsamen Trägers, der die einzelnen Energiespeicherzellen trägt.

Die Faltung des gemeinsamen Trägers zur Erzeugung einer gestapelten Anordnung der Einzelzellen ist jedoch nicht unproblematisch, da es durch die Faltung des Trägers zu Beschädigungen und Beeinflussungen der schichtförmigen Komponenten der elektrochemischen Zellen kommen kann.

### AUFGABE UND LÖSUNG

Vor diesem Hintergrund stellt sich die Erfindung die Aufgabe, eine verbesserte Dünnschichtbatterie mit einer gestapelten Anordnung der Einzelzellen bereitzustellen. Die Dünnschichtbatterie soll einfach herzustellen sein und gleichzeitig eine gute Qualität der resultierenden Batterie gewährleisten.

Diese Aufgabe wird durch eine Dünnschichtbatterie mit mehreren elektrochemischen Einzelzellen mit den folgenden Merkmalen gelöst:
a) Die elektrochemischen Einzelzellen sind auf einer Trägerfolie als gemeinsamem Träger aufgebracht,
b) die elektrochemischen Einzelzellen liegen gestapelt übereinander,
c) die elektrochemischen Einzelzellen sind jeweils durch eine Faltkante in der Trägerfolie von einer benachbarten elektrochemischen Einzelzelle getrennt,
d) die elektrochemischen Einzelzellen sind durch mindestens eine Stromleiterschicht, vorzugsweise genau eine Stromleiterschicht, auf der Trägerfolie elektrisch miteinander verbunden.

Erfindungsgemäß ist die Dünnschichtbatterie weiter dadurch gekennzeichnet, dass
e) die Trägerfolie im Bereich der Faltkanten Schwächungslinien aufweist.

Die Stapelung der Einzelzellen ist bei der erfindungsgemäßen Dünnschichtbatterie vorzugsweise so ausgebildet, dass die Einzelzellen übereinander liegen und einen Zellenstapel bilden. Bei der Herstellung der Dünnschichtbatterie wird die Stapelung der Einzelzellen durch eine Faltung des gemeinsamen Trägers erreicht, wobei bevorzugt eine Zickzack-Faltung (auch als akkordeonartige Faltung zu bezeichnen) erfolgt. Prinzipiell kann auch eine andere Faltung vorgesehen sein, beispielsweise eine Faltung, bei der der mit den Einzelzellen beschichtete Träger wickelartig aufgewunden und abgeflacht wird.

Durch die erfindungsgemäß vorgesehenen Schwächungslinien im Bereich der Faltkanten der Trägerfolie wird eine besonders saubere Faltung erreicht, die mit wenig Aufwand herstellbar ist und die zudem einen geringen Biegeradius im Bereich der Faltung des Trägers erlaubt. Die Faltung an der Faltlinie wird dabei durch die Schwächungslinien vorgegeben, so dass eine unpräzise oder falsche Faltung bei der Produktion vermieden wird. Die erfindungsgemäße Dünnschichtbatterie eignet sich daher in besonderer Weise für eine automatisierte Herstellung und für eine Massenproduktion.

In besonders bevorzugten Ausführungsformen ist jeweils genau eine Schwächungslinie pro Faltkante vorgesehen. Dies ist für eine saubere Faltung in der Regel ausreichend.

Je nach den Gegebenheiten, beispielsweise abhängig von dem Material und der Dicke der Trägerfolie, kann es gegebenenfalls auch vorteilhaft sein, zwei oder mehr Schwächungslinien pro Faltkante vorzusehen.

Bei der mindestens einen Stromleiterschicht, die auf der Trägerfolie aufgebracht ist und die die elektrochemischen Einzelzellen miteinander verbindet, kann es sich um übliche Stromleiterschichten für Dünnschichtbatterien handeln. Im Fall von Zink-Braunstein-Batterien kann es sich beispielsweise um Silberschichten oder Silberlegierungsschichten handeln. In anderen Ausführungsformen, beispielsweise bei Lithium-Ionen-Batterien, können als Stromleiterschichten beispielsweise Schichten aus Kupfer oder aus Kupferlegierungen eingesetzt werden. Weiterhin können als Stromleiterschichten beispielsweise hochleitfähige kohlenstoffbasierte Schichten, z.B. Graphene, eingesetzt werden.

Allgemein hat eine Dünnschichtbatterie mit einer gestapelten Anordnung der elektrochemischen Einzelzellen den Vorteil, dass mit einer solchen Batterie eine deutlich kleinere Fläche bei vergleichbarer Leistung benötigt wird. Wenn beispielsweise zwei Einzelzellen übereinandergestapelt werden, benötigt die Batterie nur die Hälfte der Fläche im Vergleich mit einer Batterie, bei der die Einzelzellen nebeneinander angeordnet sind. Der resultierende Höhenzuwachs bei einer gestapelten Dünnschichtbatterie ist in der Regel nicht nachteilig, da der Platzbedarf für die übrige Elektronik einer Dünnschichtbatterie in der Regel höher ausfällt als für die Dünnschichtbatterie als solche.

Durch die erfindungsgemäß vorgesehenen Schwächungslinien im Bereich der Faltkanten wird eine definierte Biegekante mit einem engen Biegeradius erreicht, so dass hierdurch im Vergleich mit herkömmlichen gestapelten Dünnschichtbatterien eine höhere Packungsdichte, vor allem bei mehrfach gestapelten Zellen, ermöglicht wird.

Durch die optimierten Faltkanten gemäß dem erfindungsgemäßen Ansatz können beispielsweise auch sehr viele Einzelzellen mit einer kleinen Grundfläche hergestellt werden, beispielsweise zwanzig oder mehr Einzelzellen, die dann in der Höhe zu einem relativ hohen Stapel gefaltet werden können.

In einer besonders bevorzugten Ausführungsform der erfindungsgemäßen Dünnschichtbatterie zeichnet sich diese durch mindestens eines der folgenden zusätzlichen Merkmale aus:
a) Die Trägerfolie weist eine erste Seite und eine zweite Seite auf, wobei auf der ersten Seite die mindestens eine Stromleiterschicht aufgebracht ist und wobei auf der zweiten Seite die Schwächungslinien eingebracht sind. Mit anderen Worten befinden sich gemäß dieser Ausführungsform die Schwächungslinien in der Trägerfolie rückseitig der Stromleiterschichten.
b) Die Schwächungslinien befinden sich ausschließlich in der Trägerfolie. Gemäß dieser Ausführungsform befindet sich in der mindestens einen Stromleiterschicht also keine Schwächungslinie.

In bevorzugter Weise sind die vorgenannten Merkmale a) und b) in Kombination miteinander verwirklicht. Die Stromleiterschichten werden in dieser Ausführungsform durch die Schwächungslinien ausschließlich in der Trägerfolie nicht beeinträchtigt, so dass auch die resultierende Impedanz der Batterie nicht maßgeblich beeinflusst wird.

Durch die Schwächungslinien auf der Trägerfolie rückseitig der Stromleiterschichten können besonders enge Biegeradien bei der Faltung erreicht werden, wodurch eine besonders hohe Packungsdichte bei der Stapelung der Einzelzellen möglich ist. Gleichzeitig wird eine stabile Materialverbindung gewährleistet.

Weiterhin ist es bevorzugt, dass sich im Bereich der Faltkanten kein Elektrodenmaterial befindet. Dies hat den Vorteil, dass das Elektrodenmaterial durch die Faltung nicht beeinträchtigt wird und es beispielsweise nicht zum Abbröckeln von Elektrodenmaterial kommen kann. Ein solches Abbröckeln könnte sich gegebenenfalls negativ auswirken und zu Fein- oder Kurzschlüssen führen.

Durch eine entsprechende Anordnung der Schichten für die elektrochemischen Einzelzellen und die Stromleiterverbindungen zwischen den Einzelzellen auf dem Träger können sowohl Parallel- als auch Seriellverschaltungen erzeugt werden, welche die gewünschten Kapazitäts- oder Spannungserhöhungen der Batterie bewirken. Je nach Bedarf können auch parallele und serielle Verschaltungen miteinander kombiniert werden.

In besonders bevorzugten Ausführungsformen zeichnet sich die erfindungsgemäße Dünnschichtbatterie durch das folgende zusätzliche Merkmal aus:
a) Die Schwächungslinien sind geradlinige Gravurlinien in der Trägerfolie.

In dieser bevorzugten Ausführungsform handelt es sich bei den Schwächungslinien um Linien bzw. um Rillen in der Trägerfolie, die sich vorzugsweise über die gesamte Breite des Trägers erstrecken. In dieser Ausführungsform sind die Schwächungslinien nicht als Perforationslinien ausgebildet, sodass die Schwächungslinien in Form der Gravurlinien die Trägerfolie nicht durchbrechen, sondern nur partiell Material von der Oberfläche der Trägerfolie ausnehmen. Es handelt sich also vorzugsweise um oberflächliche Schwächungslinien. Mit "oberflächlich" ist hierbei gemeint, dass die Schwächungslinien die Stärke der Trägerfolie nicht vollständig durchdringen.

In diesem Zusammenhang ist vorzugsweise das folgende zusätzliche Merkmal vorgesehen:
a) Die Schwächungslinien in der Trägerfolie weisen eine Tiefe von 50 bis 90% der Dicke der Trägerfolie auf.

Demgemäß verbleibt im Bereich der Schwächungslinien etwa 10 bis 50% der Materialstärke der Trägerfolie, sodass die Trägerfolie im Bereich der Faltkanten ausreichend stabil bleibt. In besonders bevorzugter Weise können die Schwächungslinien in der Trägerfolie eine Tiefe von 50 - 75% der Dicke der Trägerfolie aufweisen.

In ganz besonders bevorzugter Weise ist im Hinblick auf die Erzeugung der Schwächungslinien der erfindungsgemäßen Dünnschichtbatterie das folgende Merkmal vorgesehen:
a) Die Schwächungslinien sind durch eine Laserbehandlung erzeugt.

Die Laserbehandlung wird vorzugsweise so durchgeführt, dass die Schwächungslinien als Lasergravurlinien erzeugt werden. Vorzugsweise ist die Lasergravur nur oberflächlich, sodass sich die Lasergravur ausschließlich auf der Oberfläche der Trägerfolie befindet. Die auf der anderen Seite der Trägerfolie befindliche Stromleiterschicht wird hierdurch nicht beeinträchtigt. Dies stellt einen großen Vorteil gegenüber einer Schwächungslinie dar, die als Perforation der mit der Stromleiterschicht versehenen Trägerfolie ausgebildet ist. Wenn bei einer Perforation der bereits mit einer Stromleiterschicht versehenen Trägerfolie auch die Stromleiterschicht partiell durchbrochen wird, führt dies in der Regel zu einer unvorteilhaften Erhöhung der resultierenden Impedanz bei der Batterie. Dieser Nachteil tritt bei einer Schwächungslinie in Form einer oberflächlichen Lasergravur nicht auf.

Eine Laserbehandlung zur Erzeugung der Schwächungslinie hat darüber hinaus im Vergleich mit einer mechanischen Perforation den Vorteil, dass durch die Laserbehandlung die Trägerfolie in dem betreffenden Bereich verschmolzen wird, was zusätzlich die Dichtigkeit der Trägerfolie und damit die Lebensdauer der Dünnschichtbatterie erhöhen kann.

Untersuchungen der Erfinder haben weiterhin gezeigt, dass durch eine Schwächungslinie als Lasergravur ausschließlich auf derjenigen Seite der Trägerfolie, die der Stromleiterschicht abgewandt ist, die Stromleiterschicht auf der anderen Seite der Folie auch bei einem mehrfachen Falten des Trägers in ihrer Qualität wenig bis gar nicht verschlechtert wird. Insbesondere wird hierdurch die resultierende Impedanz im Vergleich mit einer mechanischen Perforation als Schwächungslinie nur unwesentlich oder gar nicht erhöht, wobei gleichzeitig durch die oberflächliche Lasergravurlinie eine gute Unterstützung der Faltbarkeit erreicht wird.

In besonders bevorzugten Ausführungsformen zeichnet sich die erfindungsgemäße Dünnschichtbatterie durch das folgende zusätzliche Merkmal aus:
a) Die Trägerfolie ist eine Kunststofffolie, insbesondere eine PET-Folie (Polyethylenterephthalat).

Derartige Folien, insbesondere PET-Folien, werden üblicherweise für Dünnschichtbatterien eingesetzt, so dass im Prinzip die herkömmlichen Materialien für die Herstellung einer Dünnschichtbatterie auch für die erfindungsgemäße Dünnschichtbatterie genutzt werden können und herkömmliche Herstellungsprozesse entsprechend angepasst werden können.

Beispielsweise können PET-Folien eingesetzt werden, die eine Dicke in einem Bereich zwischen 40 und 80 µm, beispielsweise 65 µm, aufweisen. Die Tiefe der Lasergravur zur Erzeugung der Schwächungslinien kann beispielsweise etwa zwei Drittel der Dicke der Folie betragen. Beispielsweise kann eine oberflächliche Lasergravur mit einer Tiefe von 40 bis 45 µm erzeugt werden. Es können jedoch auch deutlich dickere oder dünnere Folien eingesetzt werden. Beispielsweise können Folien mit einer Dicke in einem Bereich um 200 µm eingesetzt werden.

Prinzipiell ist es möglich, dass die Erzeugung der Schwächungslinien vor oder nach dem Beschichten der Trägerfolie mit den Komponenten für die elektrochemischen Einzelzellen, insbesondere vor oder nach der Beschichtung mit den Stromleiterschicht(en), erfolgt. Je nach den Gegebenheiten in dem Herstellungsprozess kann die Erzeugung der Schwächungslinien insbesondere in Form der oberflächlichen Gravurlinien in der Trägerfolie an verschiedenen Stellen des Prozesses integriert werden.

In besonders bevorzugten Ausführungsformen der erfindungsgemäßen Dünnschichtbatterie werden bei der Herstellung der Dünnschichtbatterie die verschiedenen Komponenten für die elektrochemischen Energiespeicherelemente in an sich bekannter Weise (siehe z.B. EP 4 047 695 A1) in einer Ebene auf die Trägerfolie aufgebracht, wobei anschließend durch Umschlagen der Trägerfolie an einer gemeinsamen Umschlaglinie die Elektrodenstapel zur Erzeugung der Einzelzellen erzeugt werden. Insbesondere zeichnet sich die erfindungsgemäße Dünnschichtbatterie in dieser Hinsicht durch das folgende zusätzliche Merkmal aus:
a) Die elektrochemischen Einzelzellen sind durch Aufbringen von mindestens einer Stromleiterschicht und Elektrodenschichten und gegebenenfalls Separatorschichten und/oder Elektrolytschichten auf der Trägerfolie und anschließendes Umschlagen der durch das Aufbringen beschichteten Trägerfolie an einer gemeinsamen Umschlaglinie erzeugt.

Das Aufbringen der mindestens einen Stromleiterschicht und der Elektrodenschichten und gegebenenfalls der Separatorschichten und/oder der Elektrolytschichten auf der Trägerfolie kann durch herkömmliche Druckverfahren oder beispielsweise auch durch chemische Gasphasenabscheidung (CVD) oder durch physikalische Gasphasenabscheidung (PVD) erfolgen. Einzelheiten für eine derartige Beschichtung der Trägerfolie sind dem Fachmann bekannt.

Vor der eigentlichen Stapelung der Einzelzellen werden durch das Umschlagen der beschichteten Trägerfolie die Elektrodenstapel der Zelle gebildet, wobei durch das Umschlagen die positiven und negativen Elektroden der Einzelzellen, gegebenenfalls getrennt durch eine Separatorschicht, zusammengeführt werden.

In besonders bevorzugten Ausführungsformen dieser Ausgestaltung der Dünnschichtbatterie zeichnet sich die Dünnschichtbatterie durch das folgende zusätzliche Merkmal aus:
a) Die gemeinsame Umschlaglinie weist eine Schwächung, insbesondere eine Perforationslinie, auf.

Durch die Schwächung an der gemeinsamen Umschlaglinie wird das Umschlagen erleichtert und es wird eine besondere saubere Faltung in diesem Bereich erreicht. Durch eine Perforation in diesem Bereich kann ein besonders enger Biegeradius erzeugt werden. Eine Perforation und damit eine vollständige Durchbrechung der Trägerfolie hat anders als im Bereich der Faltkanten zur Stapelung der Einzelzellen keine Nachteile im Hinblick auf die Qualität der Dünnschichtbatterie, da im Bereich der Umschlaglinie in der Regel keine weitere Beschichtung der Trägerfolie mit elektrochemischen Komponenten vorgesehen ist.

In bevorzugten Ausführungsformen der Dünnschichtbatterie ist im Hinblick auf die Schwächung und insbesondere im Hinblick auf die Perforationslinie eines der folgenden zusätzlichen Merkmale vorgesehen:
a) Die Schwächung, insbesondere die Perforationslinie, ist durch eine mechanische Behandlung erzeugt, oder
b) die Schwächung, insbesondere die Perforationslinie, ist durch eine Laserbehandlung erzeugt.

Besonders bevorzugt ist hierbei das vorgenannte Merkmal b), wonach die Schwächung im Bereich der Umschlaglinie durch eine Laserbehandlung erzeugt wird. Dies hat den besonderen Vorteil, dass sowohl die Schwächung im Bereich dieser Umschlaglinie als auch die oben erläuterten Schwächungslinien im Bereich der Faltkanten für die Stapelung der Einzelzellen im Prinzip in einem Arbeitsschritt erzeugt werden können. Beide Arten von Schwächungen können mit einem Laserarbeitsschritt erzeugt werden.

In besonders bevorzugter Weise ist im Hinblick auf die Perforationslinie das folgende zusätzliche Merkmal vorgesehen:
a) Die Perforationslinie ist durch sich wiederholende Abschnitte von 4 mm Durchbrechung mit dazwischen liegenden Abständen von 1 mm gebildet.

Diese Ausgestaltung der Perforationslinie hat sich in Versuchen der Erfinder als besonders vorteilhaft und günstig erwiesen. Insbesondere wird hiermit eine gute Unterstützung der Faltung bei dem Umschlagen der Trägerfolie erreicht, wobei gleichzeitig die Stabilität der Trägerfolie in diesem Bereich ausreichend hoch bleibt.

In besonders bevorzugten Ausführungsformen der erfindungsgemäßen Dünnschichtbatterie ist das folgende zusätzliche Merkmal vorgesehen:
a) Die Dünnschichtbatterie ist eine gedruckte Batterie.

Gedruckte Batterien eignen sich in besonderer Weise für eine schnelle und automatisierbare Produktion. Besonders geeignet sind Siebdrucktechniken. Einzelheiten zur Herstellung von gedruckten Batterien sind dem Fachmann geläufig.

In weiteren, besonders bevorzugten Ausführungsformen ist mindestens eines der folgenden zusätzlichen Merkmale vorgesehen:
a) Die elektrochemischen Einzelzellen sind seriell und/oder parallel, bevorzugt seriell, miteinander verschaltet,
b) die Dünnschichtbatterie ist ein 4,5 V-System mit drei in Serie geschalteten 1,5 V-Einzelzellen.

Vorzugsweise sind die vorgenannten Merkmale a) und b) in Kombination miteinander verwirklicht.

Je nach Anwendungsfall und je nach gewünschter Kapazität und/oder Spannung kann für die herzustellende Dünnschichtbatterie eine serielle und/oder eine parallele Verschaltung der Einzelzellen miteinander vorgesehen sein. Für viele Anwendungsfälle eignet sich insbesondere eine serielle Verschaltung der Einzelzellen.

Die Erfindung umfasst weiterhin ein Verfahren zur Herstellung einer Dünnschichtbatterie mit mehreren elektrochemischen Einzelzellen, insbesondere für die Herstellung einer Dünnschichtbatterie mit den oben beschriebenen Merkmalen. Das erfindungsgemäße Verfahren umfasst vorzugsweise die folgenden Verfahrensschritte:
a) Es wird eine Trägerfolie als gemeinsamer Träger für die elektrochemischen Einzelzellen bereitgestellt,
b) die elektrochemischen Einzelzellen werden durch Aufbringen, insbesondere Drucken und/oder CVD und/oder PVD, von Stromleiterschichten und Elektrodenschichten und gegebenenfalls Separatorschichten und/oder Elektrolytschichten auf der Trägerfolie und anschließendes Umschlagen der Trägerfolie an einer gemeinsamen Umschlaglinie erzeugt,
c) der gemeinsame Träger wird zur Stapelung der elektrochemischen Einzelzellen entlang von Faltkanten, die benachbarte elektrochemische Einzelzellen voneinander in der Ebene trennen, gefaltet, wobei die elektrochemischen Einzelzellen durch Stromleiterschichten auf der Trägerfolie elektrisch miteinander verbunden sind.

Erfindungsgemäß ist es vorgesehen, dass
d) vor, während oder nach der Erzeugung der elektrochemischen Einzelzellen gemäß Schritt b) die Trägerfolie im Bereich der Faltkanten mit Schwächungslinien versehen wird.

Die Erzeugung der elektrochemischen Einzelzellen gemäß dem vorgenannten Verfahrensschritt b) kann beispielsweise in vergleichbarer Weise erfolgen, wie es in der EP 4 047 695 A1 beschrieben ist.

Bei der Faltung des gemeinsamen Trägers zur Erzeugung der Stapelung der elektrochemischen Einzelzellen wird vorzugsweise eine Zickzack-Faltung (akkordeonartige Faltung) durchgeführt. Die Erzeugung der Schwächungslinien gemäß dem Verfahrensschritt d) erfolgt vorzugsweise auf derjenigen Seite der Trägerfolie, die der bereits aufgebrachten oder aufzubringenden Stromleiterschicht abgewandt ist. Vorzugsweise wird genau eine Schwächungslinie pro Faltkante angebracht.

Weiterhin zeichnet sich das erfindungsgemäße Verfahren in vorteilhaften Ausgestaltungen dadurch aus, dass das Verfahren zur Herstellung einer Dünnschichtbatterie mit den oben beschriebenen Merkmalen ausgebildet ist.

In einer besonders bevorzugten Ausgestaltung des erfindungsgemäßen Verfahrens ist das folgende Verfahrensmerkmal vorgesehen:
a) die Trägerfolie wird mit geradlinigen Gravurlinien im Bereich der Faltkanten und mit einer Perforationslinie entlang der gemeinsamen Umschlaglinie zur Erzeugung der elektrochemischen Einzelzellen durch eine Laserbehandlung der gegebenenfalls teilweise oder vollständig beschichteten Trägerfolie versehen, wobei die geradlinigen Gravurlinien bevorzugt rückseitig der mindestens einen Stromleiterschicht angebracht werden.

Diese Ausgestaltung des Verfahrens hat den besonderen Vorteil, dass sowohl die Umschlaglinie zur Erzeugung der elektrochemischen Einzelzellen als auch die Schwächungslinien im Bereich der Faltkanten, die zur Unterstützung der Faltung bei der Erzeugung der gestapelten Einzelzellen vorgesehen sind, in einem Arbeitsschritt bzw. in einer Laserbehandlungsvorrichtung durchgeführt werden können. Diese Ausgestaltung des Herstellungsverfahrens lässt sich daher in besonders vorteilhafter Weise in einen Fertigungsprozess integrieren.

In weiteren, besonders bevorzugten Ausgestaltungen des Herstellungsverfahrens kann es vorgesehen sein, dass auf einem Trägerfolienbogen die elektrochemischen Komponenten für mehrere Dünnschichtbatterien in einem gemeinsamen Arbeitsschritt aufgebracht werden, beispielsweise gleichzeitig gedruckt werden. Anschließend kann ein Zuschneiden des Trägerfolienbogens für die einzelnen Batterien erfolgen. Vor oder nach dem Zuschneiden, vorzugsweise vor dem Zuschneiden, kann die Erzeugung der Schwächungslinien im Bereich der Faltkanten und vorzugsweise auch die Erzeugung der Perforationslinie(n) entlang der gemeinsamen Umschlaglinie(n) erzeugt werden. Mit dieser Vorgehensweise ist in besonders vorteilhafter Weise eine Massenproduktion möglich.

Alternativ zu der oben beschriebenen Vorgehensweise, bei der die elektrochemischen Komponenten für die Herstellung der Einzelzellen alle auf derselben Trägerfolie aufgebracht werden und die Einzelzellen durch Umschlagen der Trägerfolie an einer gemeinsamen Umschlaglinie erzeugt werden, ist es prinzipiell auch möglich, die elektrochemischen Komponenten für die anodische Seite und die elektrochemischen Komponenten für die kathodische Seite der Zelle auf separaten Trägerfolien aufzubringen. Anschließend können diese separaten Trägerfolien mit den jeweiligen Komponenten bündig übereinandergelegt und beispielsweise gesiegelt werden.

Um die Montage der Einzelzellen zu erleichtern, kann es vorgesehen sein, dass im Rahmen der Aufbringung der elektrochemischen Komponenten auf die Trägerfolie ein Klebe- und/oder Siegelrahmen appliziert wird. Hierdurch kann in an sich bekannter Weise die Versiegelung der Zellen erleichtert und gleichzeitig ein Austreten von beispielsweise Elektrolyt aus den Einzelzellen vermieden werden. Weiterhin wird durch die Versiegelung die Batterie auch gegenüber Außeneinflüssen geschützt. So wird durch die Versiegelung beispielsweise in Eintreten von hoher Luftfeuchtigkeit oder von Kohlenstoffdioxid in das Innere der Zellen vermieden.

Eine Versiegelung der Einzelzellen kann beispielsweise durch Druck, Temperatur oder Ultraschall erfolgen.

Bei den herzustellenden Dünnschichtbatterien kann es sich um verschiedene Batterietypen handeln, beispielsweise um Zink-Braunstein-Batterien oder um Lithium-Ionen-Batterien. Für die Herstellung von Zink-Braunstein-Batterien eignen sich als Stromleiterschichten insbesondere silberhaltige oder silberlegierungshaltige Stromleiterschichten. Für die Herstellung von Lithium-Ionen-Batterien eignen sich für die Stromleiterschichten insbesondere kupferhaltige und aluminiumhaltige Schichten.

Die mindestens eine Stromleiterschicht, die die Einzelzellen verbindet, stellt einen Ableiter dar, der als Verlängerung des Stromsammlers der Einzelzellen ausgebildet ist. Vorzugsweise erfolgt die Verbindung der Einzelzellen miteinander über die mindestens eine Stromleiterschicht über den kompletten Querschnitt des Trägers, um eine möglichst geringe Impedanz zu erreichen. Hierdurch kann gewährleistet werden, dass beispielsweise bei der Verwendung der erfindungsgemäßen Dünnschichtbatterie für Funk- oder Datenübertragungszwecke der benötigte Peak-Strom auch bei einer geringen Restkapazität erreicht wird.

Zusätzlich kann es vorgesehen sein, dass auf der oder den Stromleiterschichten jeweils eine weitere Lage mit Kohlenstoffpartikeln aufgebracht wird. Diese zusätzliche Lage schützt die Stromleiterschicht vor einem Kontakt mit dem Elektrolyten.

Nachfolgend werden Ausführungsbeispiele der Erfindung anhand der Zeichnungen näher erläutert. Die einzelnen Merkmale können jeweils für sich oder in Kombination miteinander verwirklicht sein.

### KURZE BESCHREIBUNG DER ZEICHNUNGEN

In den Zeichnungen zeigen:
- Figur 1: fotografische Darstellung eines Trägers mit mehreren elektrochemischen Einzelzellen (nicht gefaltet), von oben;
- Figur 2: fotografische Darstellung eines Trägers mit mehreren elektrochemischen Einzelzellen (nicht gefaltet), von der Seite;
- Figur 3: fotografische Darstellung eines Trägers mit mehreren elektrochemischen Einzelzellen (gefaltet), von oben;
- Figur 4: fotografische Darstellung eines Trägers mit mehreren elektrochemischen Einzelzellen (gefaltet), von der Seite;
- Figur 5: schematische Darstellung der Struktur einer Stromleiterschicht auf einer Trägerfolie für die Herstellung von drei Batterien mit jeweils drei elektrochemischen Einzelzellen;
- Figur 6: Schema für die Anbringung von Schwächungs- und Perforationslinien in der Trägerfolie für die Herstellung von drei Batterien mit jeweils drei elektrochemischen Einzelzellen;
- Figur 7: fotografische Darstellungen der auf einer Trägerfolie aufgebrachten Stromleiterschicht (Silber) bei einer mechanischen Perforation der beschichteten Trägerfolie: Übersicht (Teilfigur A), Ansichten der Silberseite ohne Falten (Teilfigur B, Vergrößerung in Teilfigur C), Ansichten der Silberseite nach 1x Falten (Teilfigur D, Vergrößerung in Teilfigur E); und
- Figur 8: fotografische Darstellungen der auf einer Trägerfolie aufgebrachten Stromleiterschicht (Silber) bei einer oberflächlichen Lasergravur in der Trägerfolie auf der der Stromleiterschicht abgewandten Folienseite: Übersicht (Teilfigur A), Ansicht der Silberseite ohne Falten (Teilfigur B), Ansicht der Folienseite ohne Falten (Teilfigur C), Ansichten der Silberseite nach 1x Falten (Teilfigur C, Vergrößerung in Teilfigur E).

### BESCHREIBUNG BEVORZUGTER AUSFÜHRUNGSBEISPIELE

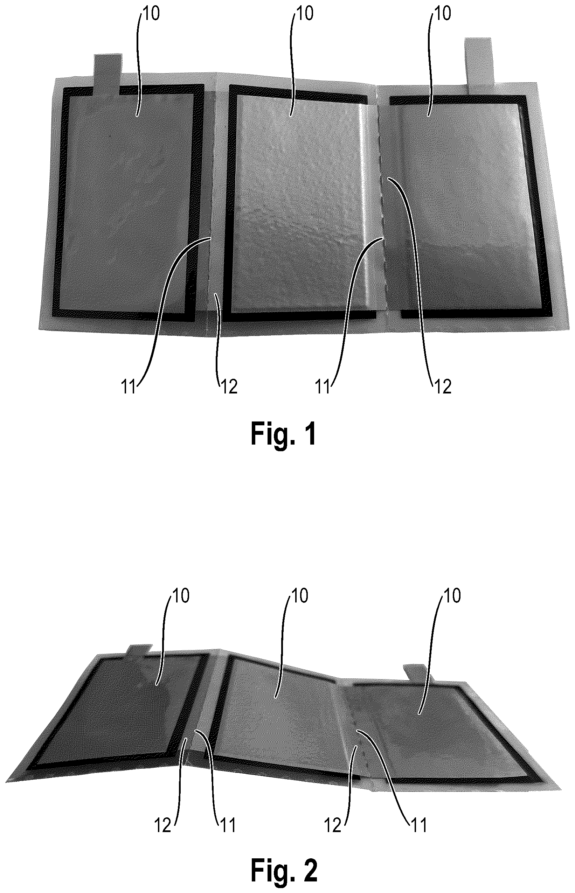

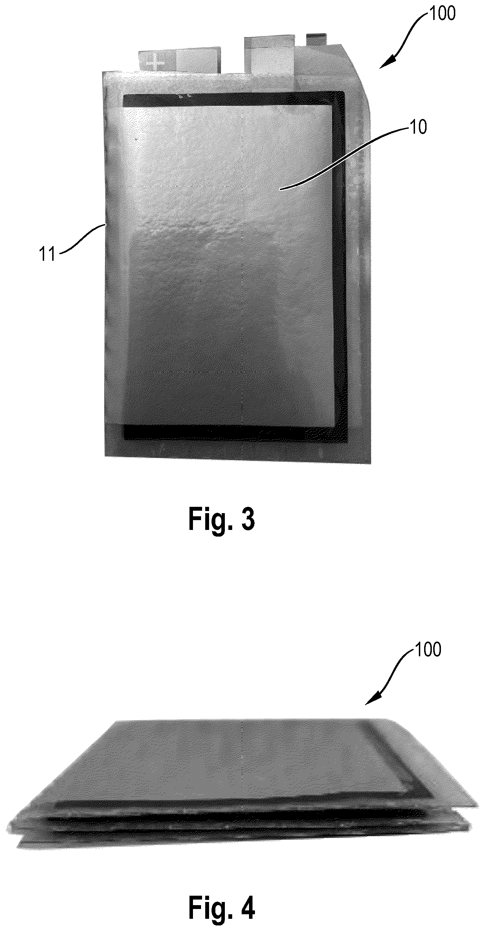

Die Figuren 1, 2, 3 und 4 zeigen fotografische Darstellungen einer erfindungsgemäßen Dünnschichtbatterie vor dem Falten (**Fig. 1, Fig. 2**) und nach dem Falten (**Fig. 3, Fig. 4**). Durch das hier dargestellte Zickzack-Falten werden die elektrochemischen Einzelzellen 10 in eine gestapelte Form zur Ausbildung der erfindungsgemäßen Dünnschichtbatterie gebracht. Die verschiedenen elektrochemischen Komponenten für die Einzelzellen 10, insbesondere die Stromleiterschichten, Elektrodenschichten, Elektrolytschichten und Separatorschichten, sind auf einer gemeinsamen Trägerfolie aufgebracht. Erfindungsgemäß befinden sich zur Erleichterung der Faltung bei der Stapelung der Einzelzellen 10 im Bereich der Faltkanten 11 Schwächungslinien.

Die Einzelzellen 10 sind über gemeinsame Stromleiterschichten 12 elektrisch miteinander verbunden. In der hier gezeigten Ausführungsform erstrecken sich die verbindenden Stromleiterschichten 12 über die ganze Breite der jeweiligen Einzelzelle 10. In anderen Ausführungsformen können auch schmalere, verbindende Stromleiterschichten vorgesehen sein.

In dem hier gezeigten Ausführungsbeispiel sind die Faltkanten 11 mit Schwächungslinien in Form von Perforationslinien ausgebildet. Diese Perforationen durchdringen dabei zum einen die Trägerfolie und zum anderen auch die jeweiligeverbindende Stromleiterschicht 12.

In anderen, besonders bevorzugten Ausführungsformen der Erfindung sind statt der Schwächungslinien in Form von Perforationen Schwächungslinien vorgesehen, die die Stromleiterschicht nicht durchdringen. Diese besonders bevorzugten Schwächungslinien sind als oberflächliche Gravurlinien ausgebildet, die sich auf derjenigen Seite der Trägerfolie befinden, die der Stromleiterschicht abgewandt ist.

Mit der erfindungsgemäßen Dünnschichtbatterie wird eine Batterie bereitgestellt, bei welcher die Einzelzellen über mindestens eine Stromleiterschicht in Serie oder parallel geschaltet sein können. Durch eine serielle Verschaltung der Einzelzellen werden die Spannungen der Einzelzellen addiert. Bei einer Parallelschaltung der Einzelzellen werden die Kapazitäten der Einzelzellen addiert. Die Einzelzellen sind durch eine Faltung des Trägers zu einem Zellenstapel oder Zellenpack zusammengefaltet.

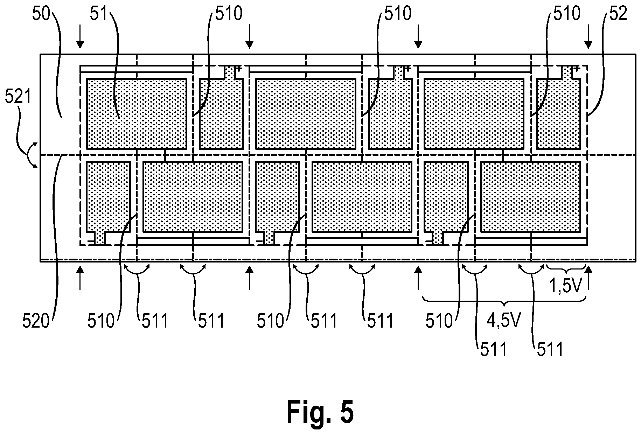

**Fig. 5** zeigt ein besonders bevorzugtes Ausführungsbeispiel für eine mit einer Stromleiterschicht 51 beschichtete Trägerfolie 50. Bei der Stromleiterschicht 51 kann es sich beispielsweise um eine Silberschicht handeln, die als Stromkollektor und Stromableiter insbesondere für eine Zink-Braunstein-Batterie eingesetzt werden kann. Je nach der Zellchemie können auch andere Stromleiterschichten verwendet werden. Bei der Trägerfolie 51 handelt es sich vorzugsweise um eine PET-Folie.

Das hier gezeigte Druckbild (Struktur) für die Stromleiterschicht 51 ist zur Herstellung von drei Dünnschichtbatterien mit jeweils drei seriell miteinander verschalteten Einzelzellen vorgesehen. Die Schnittstellen zum Zuschneiden des Trägerfolienbogens für die einzelnen Batterien sind durch Pfeile angedeutet.

Die punktierten Linien 510 bezeichnen die Schwächungslinien im Bereich der Faltkanten 11 bei der Stapelung der Einzelzellen 10. Weiterhin ist eine gemeinsame Umschlaglinie 520 gezeigt. Nach dem Aufbringen der Stromleiterschicht 51 sowie der weiteren Schichten für die Elektroden und gegebenenfalls für den Separator und den Elektrolyten wird die beschichtete Trägerfolie 50 an dieser Umschlaglinie 520 umgeschlagen (Doppelpfeil 521), so dass die entsprechenden Komponenten für die Einzelzellen zusammengeführt werden. Mithilfe eines zusätzlich aufgebrachten Kleberahmens oder anderer Mittel erfolgt zweckmäßigerweise eine Versiegelung der Einzelzellen.

Anschließend wird durch Faltung im Bereich der Schwächungslinien 510 eine Zickzack-Faltung vorgenommen (Doppelpfeile 511), um die Einzelzellen aufeinanderzustapeln. Vor oder nach der Versiegelung der Einzelzellen erfolgt ein Zuschneiden der Trägerfolie (Zuschneidelinie 52).

Mit einem solchen Trägerfolienbogen können beispielsweise drei Dünnschichtbatterien mitjeweils 4,5 V hergestellt werden, die jeweils aus drei in Serie geschalteten 1,5 V-Zellen aufgebaut sind.

Wie an diesem Druckbild zu erkennen ist, durchlaufen die Schwächungslinien 510 jeweils auf der entsprechenden Seite der Trägerfolie 50 einmal die kathodische Seite und einmal die anodische Seite der Einzelzellen. Insbesondere in der bevorzugten Ausführungsform der Erfindung, bei der die Schwächungslinien 510 auf ausschließlich derjenigen Seite der Trägerfolie angebracht werden, die der Stromleiterschicht abgewandt ist, wird die Stromleiterschicht durch die Faltung an der Schwächungslinie 510 nur minimal beeinträchtigt.

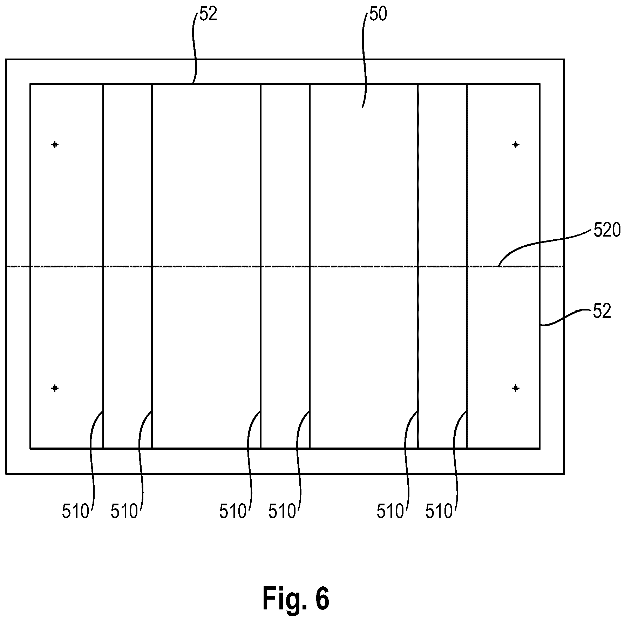

**Fig. 6** illustriert die Anordnung der Schwächungslinien 510 und der gemeinsamen Umschlaglinie 520 auf einem Trägerfolienbogen 50 für die Herstellung von drei Dünnschichtbatterien mit jeweils drei Einzelzellen. Die Linie 52 kennzeichnet den Zuschnitt für die drei Dünnschichtbatterien. Die Schwächungslinien 510 werden vorzugsweise rückseitig der aufzubringenden Stromleiterschicht (zum Beispiel einer Silberschicht) durch Laser als geradlinige Schwächungslinie (Lasergravur) auf die Trägerfolie 50 aufgebracht. Vorzugsweise durchdringt diese Lasergravur die Dicke der Trägerfolie nicht vollständig. Beispielsweise kann bei einer Folie mit einer Dicke von 65 µm die Tiefe der Lasergravur ca. 40 bis 45 µm betragen.

Die gemeinsame Umschlaglinie 520 kann ebenfalls durch Laser angebracht werden. Hierfür wird vorzugsweise eine Perforationslinie auf die Trägerfolie 50 aufgebracht, insbesondere mit der Abfolge 4 mm Perforation und 1 mm Folie. Bei einer Geschwindigkeit des Lasers von 0,1 m/s und 2,4 W Leistung (Schnittdaten: 2 % Leistung und 2 % Geschwindigkeit) kann beispielsweise pro Bogen die erforderliche Laserbehandlung innerhalb von drei Minuten durchgeführt werden.

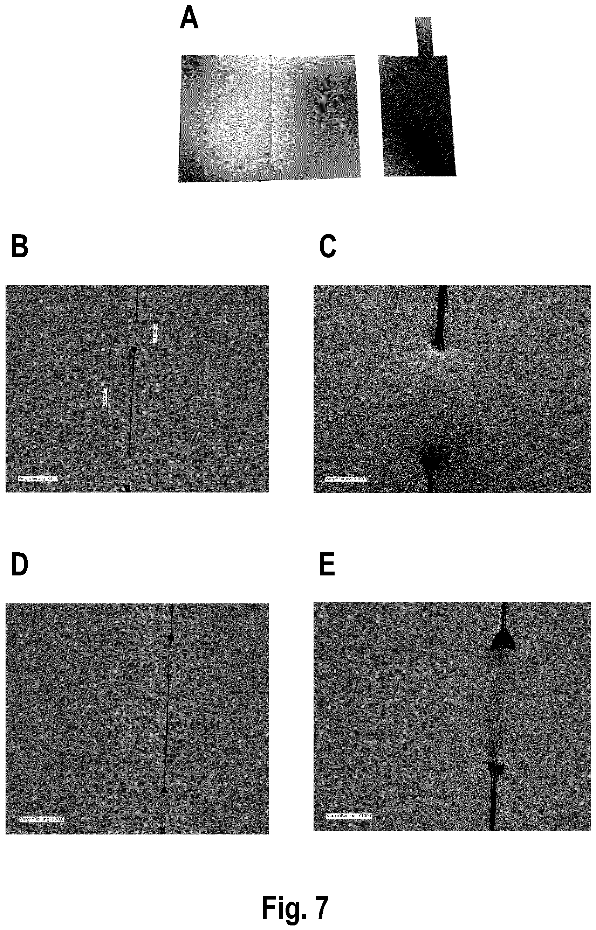

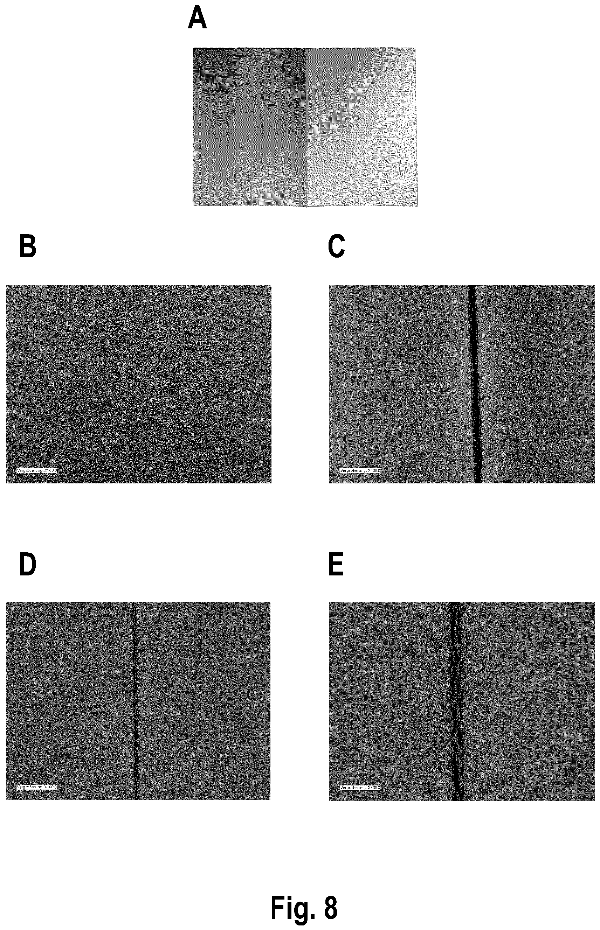

Die Figuren 7 und 8 illustrieren die Auswirkungen einer mechanischen Perforation als Schwächungslinie (**Fig. 7**) im Vergleich mit einer auf der der Stromleiterschicht abgewandten Seite der Trägerfolie eingebrachten Schwächungslinie durch eine Lasergravur (**Fig. 8**).

In der Fig. 7 zeigt die Teilfigur B (Vergrößerung in Teilfigur C) die Silberableiterschicht im Bereich der Perforation vor dem Falten und die Teilfigur D (Vergrößerung in Teilfigur E) die Silberableiterschicht im Bereich der Perforation nach einmaligem Falten.

In der Fig. 8 ist in der Teilfigur B die Stromleiterschicht (Silberseite) und in der Teilfigur C die rückwärtige Folienseite mit der Lasergravur, jeweils vor dem Falten, gezeigt. Die Teilfigur D (Vergrößerung in Teilfigur E) zeigt die Silberseite nach einmaligem Falten.

In der nachfolgenden Tabelle 1 sind Messwerte für den Widerstand an diesen Stromleiterschichten gezeigt. Es wurden hierbei mit Silber beschichtete Trägerfolien ohne Perforation, mit mechanischer Perforation (siehe Fig. 7) und mit Lasergravur rückseitig der Stromleiterschicht (siehe Fig. 8) miteinander verglichen. Ohne Faltung ergaben sich bei diesen drei beschichteten Trägerfolien keine wesentlichen Unterschiede. Nach einmaligem Falten zeigte die beschichtete Trägerfolie mit mechanischer Perforation bereits einen deutlich höheren Widerstand im Vergleich mit der beschichteten Folie ohne Perforation und ebenfalls im Vergleich mit der mit als Lasergravur ausgebildeten Schwächungslinie. Besonders nach zehnmaligem Falten konnte dieser Effekt in verstärkter Weise beobachtet werden. Hierbei zeigte sich, dass die Ausbildung der Faltlinie als rückseitige Lasergravur der mechanischen Perforation deutlich überlegen ist. Diese rückseitige Gravur als Schwächungslinie für die Faltung beschädigte die Silberschicht am wenigsten und unterstützte dabei gleichzeitig die Faltbarkeit.

**Tabelle 1: Messung des Widerstands bei unterschiedlichen Faltkanten.**

| **Perforationsmethode** | **Ohne Faltung (mΩ)** | **1× Falten (mΩ)** | **10× Falten (mΩ)** |
|---|---|---|---|
| Ohne Perforation | 138 | 144 | 161 |
| Mit mechanischer Perforation | 140 | 170 | 350 |
| Mit Lasergravur (rückseitig der Silberschicht) | 141 | 136 | 185 |

## Patentansprüche

1. Dünnschichtbatterie (100) mit mehreren elektrochemischen Einzelzellen (10) mit den folgenden Merkmalen:
a) Die elektrochemischen Einzelzellen (10) sind auf einer Trägerfolie (50) als gemeinsamem Träger aufgebracht,
b) die elektrochemischen Einzelzellen (10) liegen gestapelt übereinander,
c) die elektrochemischen Einzelzellen (10) sind jeweils durch eine Faltkante (11) in der Trägerfolie von einer benachbarten elektrochemischen Einzelzelle getrennt,
d) die elektrochemischen Einzelzellen (10) sind durch mindestens eine Stromleiterschicht (12; 51) auf der Trägerfolie elektrisch miteinander verbunden,
**dadurch gekennzeichnet, dass**
e) die Trägerfolie im Bereich der Faltkanten (11) Schwächungslinien (510) aufweist.

2. Dünnschichtbatterie nach Anspruch 1 mit mindestens einem der folgenden zusätzlichen Merkmale:
a) Die Trägerfolie (50) weist eine erste Seite und eine zweite Seite auf, wobei auf der ersten Seite die mindestens eine Stromleiterschicht (51) aufgebracht ist und wobei auf der zweiten Seite die Schwächungslinien (510) eingebracht sind,
b) die Schwächungslinien (510) befinden sich ausschließlich in der Trägerfolie (50).

3. Dünnschichtbatterie nach Anspruch 1 oder Anspruch 2 mit dem folgenden zusätzlichen Merkmal:
a) Die Schwächungslinien (510) sind geradlinige Gravurlinien in der Trägerfolie (50).

4. Dünnschichtbatterie nach einem der vorhergehenden Ansprüche mit dem folgenden zusätzlichen Merkmal:
a) Die Schwächungslinien (510) in der Trägerfolie weisen eine Tiefe von 50 bis 90% der Dicke der Trägerfolie (50) auf.

5. Dünnschichtbatterie nach einem der vorhergehenden Ansprüche mit dem folgenden zusätzlichen Merkmal:
a) Die Schwächungslinien (510) sind durch eine Laserbehandlung erzeugt.

6. Dünnschichtbatterie nach einem der vorhergehenden Ansprüche mit dem folgenden zusätzlichen Merkmal:
a) Die Trägerfolie (50) ist eine Kunststofffolie, insbesondere eine PET-Folie.

7. Dünnschichtbatterie nach einem der vorhergehenden Ansprüche mit dem folgenden zusätzlichen Merkmal:
a) Die elektrochemischen Einzelzellen (10) sind durch Aufbringen von mindestens einer Stromleiterschicht (51) und Elektrodenschichten und gegebenenfalls Separatorschichten und/oder Elektrolytschichten auf der Trägerfolie (50) und anschließendes Umschlagen der Trägerfolie an einer gemeinsamen Umschlaglinie (520) erzeugt.

8. Dünnschichtbatterie nach Anspruch 7 mit dem folgenden zusätzlichen Merkmal:
a) Die gemeinsame Umschlaglinie (520) weist eine Schwächung, insbesondere eine Perforationslinie, auf.

9. Dünnschichtbatterie nach Anspruch 8 mit einem der folgenden zusätzlichen Merkmale:
a) Die Schwächung, insbesondere die Perforationslinie, ist durch eine mechanische Behandlung erzeugt, oder
b) die Schwächung, insbesondere die Perforationslinie, ist durch eine Laserbehandlung erzeugt.

10. Dünnschichtbatterie nach Anspruch 8 oder Anspruch 9 mit dem folgenden zusätzlichen Merkmal:
a) Die Perforationslinie ist durch sich wiederholende Abschnitte von 4 mm Durchbrechung mit dazwischen liegenden Abständen von 1 mm gebildet.

11. Dünnschichtbatterie nach einem der vorhergehenden Ansprüche, mit dem folgenden zusätzlichen Merkmal:
a) Die Dünnschichtbatterie (100) ist eine gedruckte Batterie.

12. Dünnschichtbatterie nach einem der vorhergehenden Ansprüche mit mindestens einem der folgenden zusätzlichen Merkmale:
a) Die elektrochemischen Einzelzellen (10) sind seriell und/oder parallel, bevorzugt seriell, miteinander verschaltet,
b) die Dünnschichtbatterie (100) ist ein 4,5 V-System mit drei in Serie geschalteten 1,5 V-Einzelzellen (10).

13. Verfahren zur Herstellung einer Dünnschichtbatterie (100) mit mehreren elektrochemischen Einzelzellen (10), wobei das Verfahren die folgenden Verfahrensschritte umfasst:
a) Es wird eine Trägerfolie (50) als gemeinsamer Träger für die elektrochemischen Einzelzellen (10) bereitgestellt,
b) die elektrochemischen Einzelzellen (10) werden durch Aufbringen von Stromleiterschichten (51) und Elektrodenschichten und gegebenenfalls Separatorschichten und/oder Elektrolytschichten auf der Trägerfolie und anschließendes Umschlagen der Trägerfolie an einer gemeinsamen Umschlaglinie (520) erzeugt,
c) der gemeinsame Träger wird zur Stapelung der elektrochemischen Einzelzellen (10) entlang von Faltkanten (11), die benachbarte elektrochemische Einzelzellen voneinander trennen, gefaltet, wobei die elektrochemischen Einzelzellen durch mindestens eine Stromleiterschicht (12; 51) auf der Trägerfolie elektrisch miteinander verbunden sind, **dadurch gekennzeichnet, dass**
d) vor, während oder nach der Erzeugung der elektrochemischen Einzelzellen (10) gemäß Schritt b) die Trägerfolie (50) im Bereich der Faltkanten (11) mit Schwächungslinien (510) versehen wird.

14. Verfahren nach Anspruch 13, **dadurch gekennzeichnet, dass** das Verfahren zur Herstellung einer Dünnschichtbatterie (100) gemäß mindestens einem der Ansprüche 2 bis 12 ausgebildet ist.

15. Verfahren nach Anspruch 13 oder Anspruch 14 mit dem folgenden Verfahrensmerkmal:
a) die Trägerfolie (50) wird mit geradlinigen Gravurlinien (510) im Bereich der Faltkanten (11) und mit einer Perforationslinie entlang der gemeinsamen Umschlaglinie (520) zur Erzeugung der elektrochemischen Einzelzellen durch eine Laserbehandlung der Trägerfolie versehen.
